# EUROPÄISCHE PATENTSCHRIFT

(11) **EP 4 409 174 B1**
(45) Veröffentlichungstag und Bekanntmachung des Hinweises auf die Patenterteilung: **20.05.2026**
(21) Anmeldenummer: 22789214.8
(22) Anmeldetag: 19.09.2022
(51) Int. Cl.: F16K 11/074, B60S 1/48

(54) **VERTEILUNGSEINRICHTUNG UND FLÜSSIGKEITSVERTEILUNGSAKTUATOR**
DISTRIBUTION DEVICE AND LIQUID DISTRIBUTION ACTUATOR
DISPOSITIF DE DISTRIBUTION ET ACTIONNEUR DE DISTRIBUTION DE LIQUIDE

(30) Priorität: 29.09.2021 DE 102021210883
(43) Veröffentlichungstag der Anmeldung: 07.08.2024
(73) Patentinhaber: Schaeffler Technologies AG & Co. KG, 91074 Herzogenaurach (DE)
(72) Erfinder: FISCHER, Matthias, 80687 München (DE); GOETZE, Wolf, 80687 München (DE); BARTHOLMAI, Bjoern, 80687 München (DE)
(74) Vertreter: Schaeffler Technologies
(86) Internationale Anmeldenummer: PCT/EP2022/075915
(87) Internationale Veröffentlichungsnummer: WO 2023/052167

(56) Entgegenhaltungen:
- DE-A1- 102016 120 642
- DE-A1- 102017 121 205
- JP-A- 2000 130 613
- US-A1- 2015 233 483
- US-A1- 2019 136 988

## Beschreibung

Die Erfindung betrifft eine Verteilungseinrichtung für einen Flüssigkeitsverteilungsaktuator sowie einen Flüssigkeitsverteilungsaktuator mit einer solchen Verteilungseinrichtung.

JP2000130613A offenbart eine Verteilungseinrichtung nach dem Oberbegriff des Anspruchs 1.

Eine der Erfindung zugrunde liegende Aufgabe ist es, eine Wasserverteilung für eine Fahrzeugreinigung zu verbessern, und zwar im Hinblick auf die zunehmende Zahl von Fahrzeugsensoren.

Diese Aufgabe wird durch eine gemäß Anspruch 1 vorgeschlagene und unter Schutz gestellte Verteilungseinrichtung gelöst. Es wird ferner ein Flüssigkeitsverteilungsaktuator mit einer solchen Verteilungseinrichtung vorgeschlagen und unter Schutz gestellt (vgl. Anspruch 6).

Des Weiteren werden eine Reinigungsvorrichtung sowie ein Fahrzeug vorgeschlagen und unter Schutz gestellt (vgl. Anspruch 7 und 8). Vorteilhafte Ausführungsformen der Erfindung sind Gegenstand der Unteransprüche.

Es wird eine Verteilungseinrichtung zur Versorgung einzelner Reinigungsstellen eines Fahrzeugs mit einer druckbeaufschlagten Flüssigkeit vorgeschlagen.

Die Verteilungseinrichtung weist dabei ein Gehäuse mit einem Zulaufanschluss und mehreren Ablaufanschlüssen auf sowie einen darin angeordneten, elektromotorisch antreibbaren, drehbar verstellbaren Verteiler in Gestalt einer Scheibe, an welcher Flüssigkeitsaufnahme- und Flüssigkeitsführungsmittel ausgeformt sind. Die Verteilerscheibe ist dabei in definierte Positionen relativ zum Gehäuse drehbar verstellbar, um eine Flüssigkeitsversorgung über die einzelnen Ablaufanschlüsse zu ermöglichen.

Die Flüssigkeitsaufnahme- und Flüssigkeitsführungsmittel umfassen dabei eine stirnseitige Radialnut bzw. einen stirnseitigen Radialkanal, welche / welcher die Flüssigkeit zu den gewünschten Stellen der Verteilungseinrichtung steuert bzw. führt.

Die Radialnut ist dabei in Gestalt eines offenen Profils ausgeführt und erstreckt sich von einer radialumfangsseitigen Außenfläche der Verteilerscheibe in die Verteilerscheibe.

Die Radialnut kann dabei zudem in Form einer sog. Radialdurchgangsnut ausgeführt sein, die sich als solche zwischen zwei Stirnflächen der Verteilerscheibe bzw. von Stirnseite zu Stirnseite der Verteilerscheibe, d.h. in einer Längsrichtung der Verteilerscheibe durch die Verteilerscheibe hindurch bzw. über ihre gesamte Höhe bzw. Dicke erstreckt.

Alternativ dazu kann zu beiden Seiten der Verteilerscheibe bzw. stirnseitig an der Verteilerscheibe je eine Radialnut vorgesehen sein, die sich nur um ein bestimmtes Maß in die Verteilerscheibe hinein erstreckt. D.h., dass diese beiden Radialnuten einander gegenüber liegen und durch eine zwischen ihnen liegende Wandung der Verteilerscheibe voneinander getrennt sind.

Der Zulaufanschluss speist dabei einen Radialspalt mit druckbeaufschlagter Flüssigkeit, welchen die Verteilerscheibe radialumfangsseitig mit dem Gehäuse bildet und welcher die Flüssigkeit zur Radialnut führt bzw. steuert.

Dieser vorgeschlagene Wasserverteilungsmechanismus reduziert das seitens eines Elektromotors zur Verstellung der Verteilerscheibe aufzubringende Drehmoment auf ein Minimum.

Dieser vorgeschlagene Wasserverteilungsmechanismus vereinfacht außerdem eine Fahrzeugreinigungsvorrichtung bzw. ein Fahrzeugreinigungssystem und reduziert somit die damit verbundenen Kosten, weil sich durch ihn Flüssigkeitsförderpumpen sowie Ventilblöcke mit separat betätigbaren Ventilen einsparen lassen. Folglich geht damit auch eine Gewichtsersparnis einher. Indem Förderpumpen eingespart werden, vereinfacht sich auch eine entsprechende Pumpenansteuerung.

Zudem reduziert dieser vorgeschlagene Wasserverteilungsmechanismus einen Reinigungsflüssigkeitsverbrauch. Und dies wiederum äußert sich in einer Erhöhung einer Reichweite eines Fahrzeugs, die sich als solche mit einer Befüllung eines Reinigungsflüssigkeitsbehälters bzw. Tanks erreichen lässt. Insbesondere gilt dies für zukünftig vollautonom fahrende Fahrzeuge, die gegenüber bisherigen Fahrzeugen eine signifikant höhere Anzahl an Sensoren - einschließlich sicherheitsrelevanter Sensoren - aufweisen werden und deren Funktionsfähigkeit sichergestellt werden muss.

Ferner begünstigt die Einsparung von erforderlichen Vorrichtungs- bzw. Systemkomponenten auch eine entsprechende Kompaktheit einer solchen Vorrichtung bzw. eines solchen Systems, so dass insgesamt weniger Bauraum benötigt wird.

Unter einer Reinigungsstelle kann dabei eine einem Fahrzeugsensor zugeordnete Reinigungsstelle verstanden werden. Dabei muss diese Reinigungsstelle nicht selbst Teil des Sensors sein, sondern sie kann zu diesem beabstandet angeordnet sein, so zum Beispiel eine Stelle auf einer Windschutzscheibe und dergleichen mehr. Die Reinigungsstelle kann aber auch Teil eines Fahrzeugsensors sein, etwa eine einer Kamera zugeordnete Reinigungsstelle. Eine Reinigungsstelle kann aber auch eine andere Stelle des Fahrzeugs sein, die als solche keinem Fahrzeugsensor zugeordnet ist, beispielsweise eine weitere Stelle auf der besagten Windschutzscheibe, eine Stelle auf einem Scheinwerfer und dergleichen mehr.

Unter einer Flüssigkeit bzw. Reinigungsflüssigkeit kann dabei im einfachsten Fall Wasser verstanden werden, vorteilhafterweise jedoch eine wässrige Reinigungsmittellösung, d.h. Wasser in Verbindung mit einem Reinigungsmittelzusatz. Die Reinigungsmittellösung kann dabei zudem vorteilhafterweise ein Gefrier- bzw. Frostschutzmittel enthalten, welches als solches den Gefrierpunkt der Reinigungsmittellösung herabsetzt.

Der Zulaufanschluss kann dabei vorteilhafterweise auf der Höhe des Radialspaltes angeordnet sein. Dabei speist der Zulaufanschluss den Radialspalt unmittelbar bzw. direkt mit der druckbeaufschlagten Flüssigkeit. Dadurch lässt sich das seitens eines Elektromotors zur Verstellung der Verteilerscheibe aufzubringende Drehmoment noch weiter reduzieren. Ferner bedingt die unmittelbare bzw. direkte Beaufschlagung des Radialspalts eine noch kompaktere Ausführung der Verteilungseinrichtung, so dass insgesamt noch weniger Bauraum benötigt wird.

Im Betrieb der Verteilungseinrichtung bildet die Verteilerscheibe stirnseitig mit dem jeweils zugeordneten Gehäuseteil bzw. Gehäuseabschnitt einen definierten Axialspalt aus, über welchen sich geförderte Flüssigkeit im Gehäuse ausbreitet und dabei stirnseitig einen Flüssigkeitsleckagefilm bzw. eine Flüssigkeitsleckageströmung bildet, welcher / welche die Verteilerscheibe vom Gehäuse beabstandet.

Die Verteilerscheibe ist dabei dichtungsfrei - d.h. ohne ein separates Dichtelement bzw. ohne separate Dichtelemente - gegenüber dem Gehäuse ausgeführt. Daher wird vorgeschlagen, einen Flüssigkeitsrücklauf zu einem Tank vorzusehen. Zu diesem Zweck ist ein im Betrieb der Verteilungseinrichtung zwischen der Verteilerscheibe und dem Gehäuse von geförderter Flüssigkeit gefüllter, zusammenhängender Raum mit einem Rücklaufanschluss am Gehäuse fluidisch verbunden.

Die Verteilerscheibe bildet dabei über mindestens eine geschlossen umlaufende und einen Bund bildende Stirnfläche und dem ihr zugeordneten Gehäuseabschnitt einen sog. minimalen Axialspalt - im Sinne eines Dichtspaltes - aus, der aber mit dem zuvor genannten Flüssigkeitsleckagefilm bzw. der zuvor genannten Flüssigkeitsleckageströmung einhergeht. Diese mindestens eine Stirnfläche wirkt dabei im Sinne einer Dichtfläche.

Es wird ferner vorgeschlagen, die Verteilerscheibe bezüglich einer Achse orthogonal zur Längsachse der Verteilerscheibe symmetrisch bzw. spiegelsymmetrisch auszubilden, um ein hydrostatisches Gleichgewicht im Gehäuse bzw. an der Verteilerscheibe erzeugen zu können.

Dabei wird vorgeschlagen, die Verteilerscheibe stirnseitig mit zumindest einem Druckausgleichsmittel in Gestalt einer Vertiefung zu versehen, um das hydrostatische Gleichgewicht erzeugen zu können.

Erfindungsgemäß weist die Verteilerscheibe stirnseitig Druckausgleichsmitteln in Gestalt von Durchgangslöchern auf, um das hydrostatische Gleichgewicht erzeugen zu können.

Es wird ferner ein Flüssigkeitsverteilungsaktuator vorgeschlagen, welcher eine Verteilungseinrichtung bzw. Distributionseinrichtung der zuvor beschriebenen Art sowie einen Elektromotor zum Antrieb des drehbar verstellbaren Verteilers der Verteilungseinrichtung umfasst.

Zudem wird eine Reinigungsvorrichtung bzw. ein Reinigungssystem für ein Fahrzeug zur Reinigung einer Vielzahl von Reinigungsstellen am Fahrzeug vorgeschlagen, wobei die Reinigungsvorrichtung bzw. das Reinigungssystem zumindest einen Flüssigkeitsverteilungsaktuator der zuvor beschriebenen Art umfasst.

Darüber hinaus wird auch ein Fahrzeug mit einer Reinigungsvorrichtung der zuvor beschriebenen Art vorgeschlagen.

Unter einem Fahrzeug ist dabei jede Art von Fahrzeug zu verstehen, welches entweder verbrennungsmotorisch und/oder elektromotorisch betrieben wird, insbesondere aber Personenkraftwagen und/oder Nutzfahrzeuge. Dabei handelt es sich vorzugsweise um teilautonom und insbesondere um vollautonom betriebene Fahrzeuge.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen:
- Fig. 1: einen vorgeschlagenen Flüssigkeitsverteilungsaktuator in einer Schnittdarstellung,
- Fig. 2: den in Fig. 1 gezeigten Aktuator in einer ersten perspektivischen Ansicht,
- Fig. 3: den in Fig. 1 gezeigten Aktuator in einer zweiten perspektivischen Ansicht,
- Fig. 4: den in Fig. 1 gezeigten Verteiler in einer perspektivischen Ansicht sowie
- Fig. 5: den in Fig. 1 gezeigten Aktuator in einer dritten perspektivischen Ansicht.

Der vorgeschlagene Flüssigkeitsverteilungsaktuator A dient der Versorgung einzelner Reinigungsstellen eines Fahrzeugs mit einer druckbeaufschlagten Flüssigkeit bzw. Reinigungsflüssigkeit.

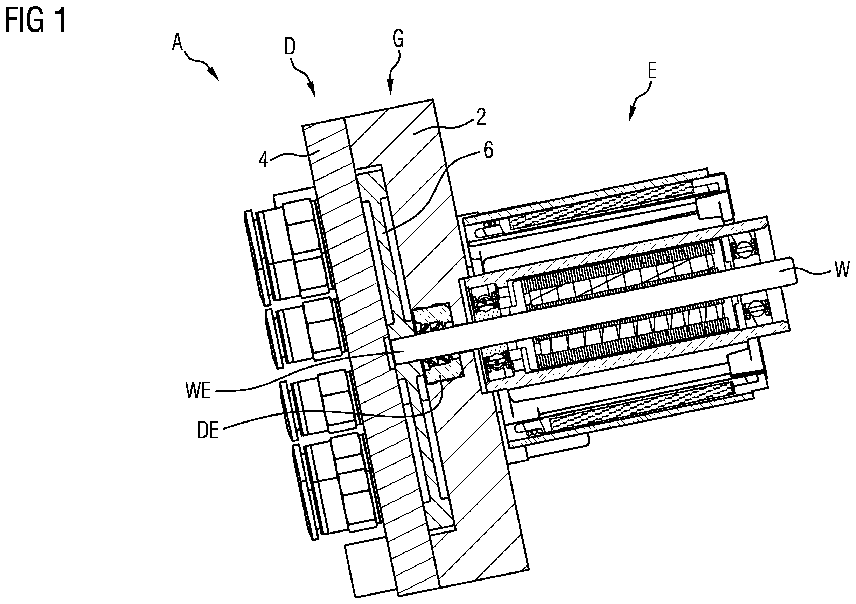

Der Aktuator A umfasst dabei eine Verteilungs- bzw. Distributionseinrichtung D mit einem bspw. im Wesentlichen zylinderförmigen Gehäuse G, welches z.B. einen ersten Gehäuseteil 2 sowie einen zweiten Gehäuseteil 4 aufweist. Diese beiden Gehäuseteile 2, 4 bilden dabei im gefügten Zustand einen Gehäuseraum aus, in welchem ein Verteiler 6 in Gestalt einer Scheibe drehbar verstellbar angeordnet ist (Fig. 1). Die beiden Gehäuseteile 2, 4 sowie die Verteilerscheibe 6 sind dabei z.B. aus einem duroplastischen Kunststoff oder einem thermoplastischen Kunststoff - etwa einem PPS-GF-Werkstoff - hergestellt.

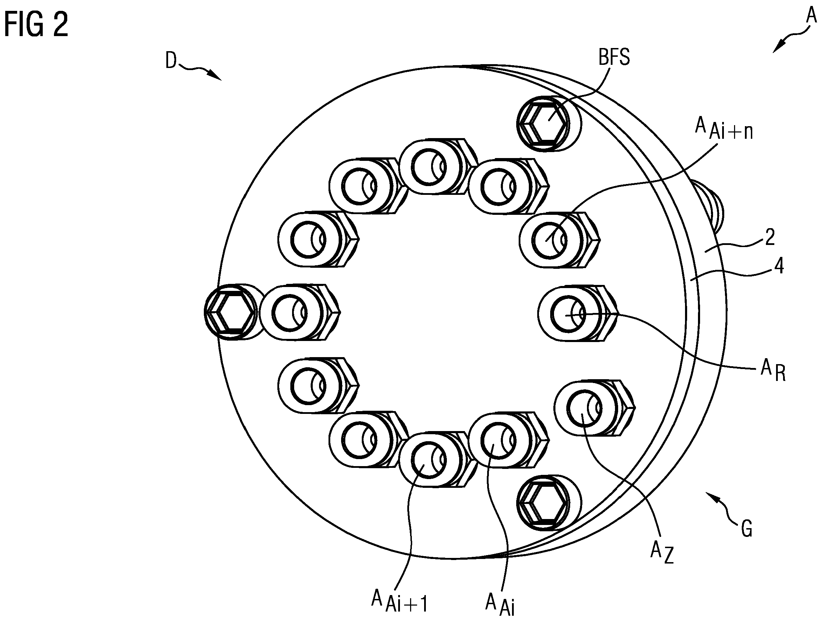

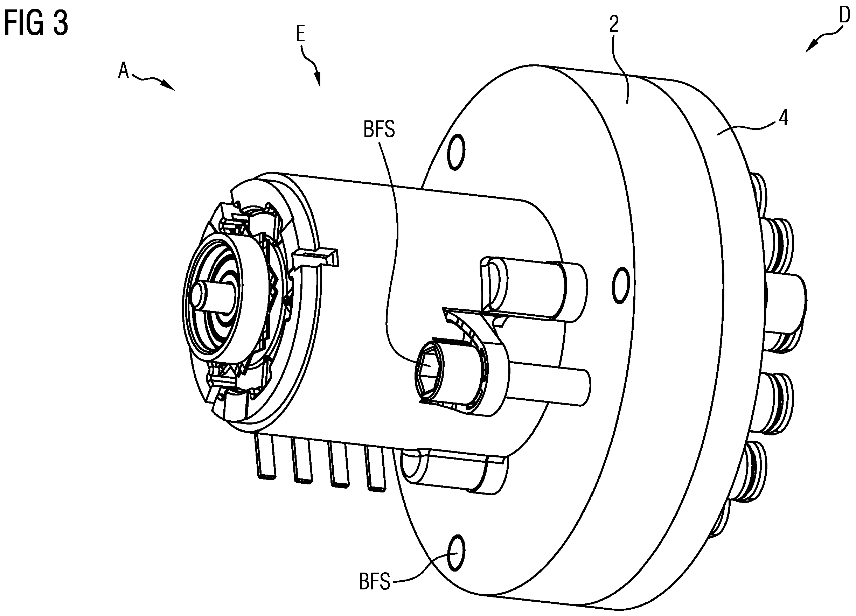

Der Aktuator A umfasst ferner einen Elektromotor bzw. E-Motor E, welcher mit dem Gehäuseteil 2 gefügt und mittels Befestigungsschrauben BFS verschraubt ist (siehe Fig. 3). Das Gehäuseteil 4 hingegen ist mit dem Gehäuseteil 2 mittels Befestigungsschrauben BFS verschraubt (siehe Fig. 2 oder Fig. 3). Alternativ zur Verschraubung lassen sich diese Gehäuseteile 2, 4 auch bspw. miteinander verrollen, etwa mittels eines Blechmantels. Eine solche Verrollung könnte dabei bspw. auch den E-Motor E mit umfassen. Der E-Motor E ist dabei bspw. als Trockenläufer ausgebildet. Alternativ dazu kann der E-Motor E auch als Nassläufer ausgeführt sein und dabei einen Spalttopf oder ein Spaltrohr aufweisen, welcher / welches einen Nassraum von einem Trockenraum trennt und in welchem der Rotor des E-Motors E von geförderter Flüssigkeit umspült bzw. umströmt ist (Nassraum). Der Stator des E-Motors E hingegen liegt dabei im Trockenraum. Eine Welle W des E-Motors E erstreckt sich dabei durch das Gehäuseteil 2 und ein Dichtelement DE, welches im Gehäuseteil 2 angeordnet ist und dabei gegenüber dem Gehäuseteil 2 sowie der Welle W abdichtet, bis in den Verteiler 6 bzw. die Verteilerscheibe 6, wobei das Wellenende WE formschlüssig in die Verteilerscheibe 6 eingreift (Fig. 1).

Fig. 2 veranschaulicht das hydraulisch-anschlussseitige Ende des Aktuators A, welches eine Vielzahl von hydraulischen Anschlüssen umfasst. Im Einzelnen umfasst dieses Ende einen Zulaufanschluss A_{Z}, mehrere Ablaufanschlüsse A_{Ai}, A_{Ai+1},..., A_{Ai+n} - entsprechend der Anzahl der zuvor genannten Reinigungsstellen des Fahrzeugs - sowie einen weiteren Ablaufanschluss in Gestalt eines Rücklaufanschlusses A_{R}. Fig. 2 veranschaulicht dabei ferner einzelne hydraulische Anschlusselemente, die bspw. in ein korrespondierendes Gewindeloch des Gehäuseteils 4 eingeschraubt sind.

Fig. 3 veranschaulicht zudem den elektromotorischen Abschnitt des Aktuators A sowie das elektrisch-anschlussseitige Ende des Aktuators A mit elektrischen Kontakten bzw. Pins.

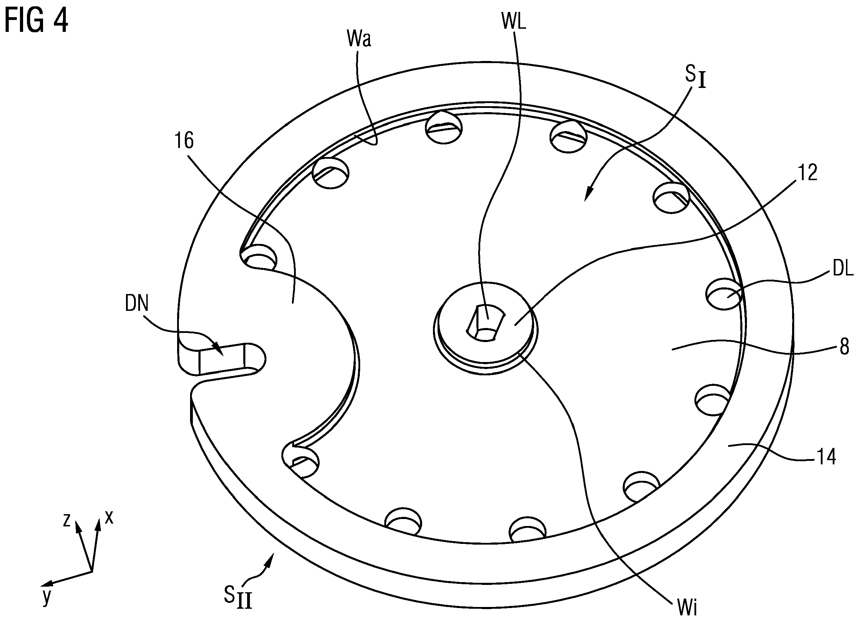

Fig. 4 veranschaulicht den zuvor genannten Verteiler 6, welcher in Gestalt einer Scheibe ausgebildet ist. Die beiden Stirnseiten S_{I}, S_{II} der Verteilerscheibe 6 sind dabei identisch, d.h. symmetrisch bzw. spiegelsymmetrisch bezüglich einer Achse Y - Y bzw. Z - Z orthogonal zur Längsachse X - X der Verteilerscheibe 6 ausgeführt, um im Betrieb des Aktuators A ein hydrostatisches Gleichgewicht bzw. einen hydrostatischen Druckausgleich - in der Richtung X - X - an der Verteilerscheibe 6 bzw. innerhalb des Gehäuses G, 2, 4 erzeugen zu können. Somit bleibt die Verteilerscheibe 6 im Betrieb der Verteilungseinrichtung D von den Gehäuseteilen 2, 4 beabstandet.

Die Verteilerscheibe 6 weist dabei stirnseitig eine erste - äußere - geschlossen umlaufende Stirnfläche 14, 16 sowie eine zweite - innere - geschlossen umlaufende Stirnfläche 12 um das Wellenloch WL auf, in welches das komplementär dazu ausgebildete Wellenende WE (Fig. 1) formschlüssig eingreift.

Diese beiden Stirnflächen 12 & 14, 16 liegen dabei bspw. auf einer Höhe und bilden zudem im Betrieb der Verteilungseinrichtung D gegenüber den jeweils zugeordneten Gehäuseabschnitten bzw. Gehäuseteilen 2, 4 einen sog. minimalen Axialspalt aus, über welchen sich die geförderte Flüssigkeit im Gehäuseraum ausbreitet.

Diese beiden - je einen geschlossenen Bund bildenden - Stirnflächen 12 & 14, 16 bezeichnet man auch als Dichtflächen der Verteilerscheibe 6, die gegenüber den zugeordneten Gehäuseabschnitten bzw. Gehäuseteilen 2, 4 entsprechend dichten bzw. den besagten minimalen Axialspalt definieren bzw. bilden.

Im durch die Figuren veranschaulichten Ausführungsbeispiel erstreckt sich die Gesamtdichtfläche der Verteilerscheibe 6 in radialer Richtung in der Summe über mindestens ca. 8 bis 10mm. D.h., die Gesamtdichtlänge der Verteilerscheibe 6 in radialer Richtung beträgt in der Summe mindestens ca. 8 bis 10mm.

In einer Ausführung erstreckt sich die besagte erste - äußere - geschlossen umlaufende Stirnfläche 14, 16 in radialer Richtung der Verteilerscheibe 6 um bereits mindestens ca. 8 bis 10mm. D.h., die Gesamtdichtlänge dieser äußeren Stirnfläche 14, 16 in radialer Richtung der Verteilerscheibe 6 beträgt bereits mindestens ca. 8 bis 10mm.

Zwischen diesen beiden Stirnflächen 12 & 14, 16 ist eine weitere, dritte und zurückgesetzte, geschlossen umlaufende Stirnfläche 8 vorgesehen, die als solche eine Aussparung in Gestalt einer Vertiefung bzw. einen freigestellten zusammenhängenden Bereich bildet, welche / welcher zudem von einer äußeren, geschlossen umlaufenden Wandung Wₐ der Verteilerscheibe 6 sowie von einer inneren, geschlossen umlaufenden Wandung Wᵢ der Verteilerscheibe 6 begrenzt wird. Dieser im Vergleich zur ersten und zweiten Stirnfläche 12 & 14, 16 großflächige und freigestellte Bereich nimmt einen Großteil des geförderten Flüssigkeitsvolumens auf und dient dabei dem hydrostatischen Druckausgleich.

Zudem erstrecken sich durch die Verteilerscheibe 6 stirnseitig mehrere Durchgangslöcher DL, die allesamt zur Ausbildung des hydrostatischen Gleichgewichts beitragen. Diese Durchgangslöcher DL liegen dabei im freigestellten Bereich und dabei bspw. angrenzend an der äußeren Wandung Wₐ.

Bis auf einen Bereich 16 um eine Radialdurchgangsnut DN herum, der bspw. in etwa halbkreisförmig um die Radialdurchgangsnut DN ausgeformt ist und die besagte erste, äußere Stirnfläche 14, 16 der Verteilerscheibe 6 mit ausbildet, sind die Durchgangslöcher DL in gleichen Abständen zueinander angeordnet, um den hydrostatischen Druckausgleich zu begünstigen.

Die Radialdurchgangsnut DN ist dabei zur radialumfangsseitigen Außenfläche der Verteilerscheibe 6 hin offen bzw. geht in diese über. Der Übergang von dieser Außenfläche in die Radialdurchgangsnut DN ist dabei bspw. konvex ausgeführt.

Auch an den beiden Gehäuseteilen 2, 4 kann jeweils stirnseitig sowie der Verteilerscheibe 6 zugewandt zumindest eine Aussparung in Gestalt einer Vertiefung ausgeformt sein, die als solche - in Verbindung mit der zugwandten stirnseitigen Vertiefung der Verteilerscheibe 6 - zur Ausbildung einer ausgeglichenen hydraulischen Lagerung der Verteilerscheibe 6 über ihren gesamten Verstellbereich beiträgt bzw. solch eine hydraulische Lagerung sicherstellt. Diese zusätzlichen Aussparungen bzw. Vertiefungen in den Gehäuseteilen 2, 4 können dabei identisch ausgebildet bzw. ausgeformt sein und zudem einander genau gegenüber liegen.

In einer weiteren Ausführung ist entweder nur das Gehäuseteil 2 oder nur das Gehäuseteil 4 stirnseitig und jeweils der Verteilerscheibe 6 zugewandt mit zumindest einer solchen Aussparung in Gestalt einer Vertiefung ausgeführt.

In einer weiteren Ausführung ist am Gehäuseteil 2 und / oder am Gehäuseteil 4 stirnseitig und der Verteilerscheibe 6 zugewandt zusätzlich eine Nut ausgeführt, welche als solche den Radialspalt RS zwischen der Umfangsseite der Verteilerscheibe 6 bzw. der radialumfangsseitigen Außenfläche der Verteilerscheibe 6 und dem Gehäuse G, 2, 4 mit dem Rücklaufanschluss A_{R} fluidisch verbindet. Eine solche Nut bewirkt vorteilhafterweise einen Druckabbau in einer sog. Spülposition - bzw. Spülstellung - oder Neutralposition - bzw. Neutralstellung - der Verteilerscheibe 6, wobei die Spülposition und Neutralposition im Folgenden noch beschrieben werden.

In einer weiteren alternativen Ausführung umfasst das Gehäuse G zudem einen geschlossen umlaufenden Distanzring, welcher als solcher zwischen dem Gehäuseteil 2 und dem Gehäuseteil 4 angeordnet ist und diese beiden Gehäuseteile 2, 4 von einander beabstandet. Dieser Distanzring bildet dabei den die Verteilerscheibe 6 aufnehmenden Gehäuseraum mit aus.

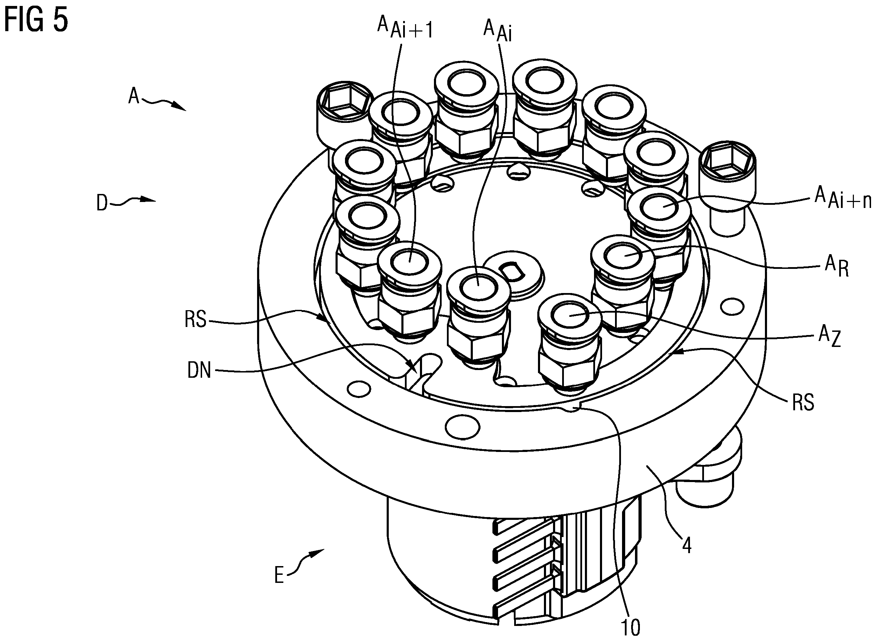

Die Fig. 5 veranschaulicht die Verteilungseinrichtung D unter Ausblendung des Gehäuseteils 4, um die Verteilerscheibe 6 in ihrer Einbaulage zu zeigen. Zu erkennen ist dabei u.A. der Radialspalt RS sowie die Radialdurchgangsnut DN, die als solche zum Radialspalt RS offen ist. Zu erkennen ist auch, dass der Zulaufanschluss A_{Z} auf der Höhe des Radialspaltes RS und dabei zugleich über einer den Radialspalt RS lokal etwas aufweitenden Ausbuchtung 10 des Gehäuseteils 2 liegt.

Im Folgenden wird die Funktionsweise des vorgeschlagenen Verteilungsmechanismus beschrieben.

Im Betrieb des Aktuators A ist der Verteiler 6 bzw. die Verteilerscheibe 6 innerhalb des ihn / sie aufnehmenden Raums des Gehäuses G, 2, 4 von geförderter Flüssigkeit umspült bzw. umströmt.

Über den Zulaufanschluss A_{Z} wird die Verteilungseinrichtung D mit einer druckbeaufschlagten Flüssigkeit versorgt bzw. gespeist. Der Zulaufanschluss A_{Z} befindet sich dabei auf der Höhe des Radialspaltes RS (vgl. Fig 2 i.V.m. Fig. 5), so dass die Flüssigkeit direkt auf den Radialspalt RS trifft, über welchen sie sich dann über den ganzen Gehäuseraum verteilt. Dabei strömt die Flüssigkeit bis in die Radialdurchgangsnut DN, welche als solche ein offenes Profil in der Verteilerscheibe 6 bildet und zum Radialspalt RS offen ist und über welche die Flüssigkeit, je nach Ausrichtung bzw. Drehverstellung der Verteilerscheibe 6, an die gewünschte Stellte der Verteilungseinrichtung D geführt bzw. gesteuert wird.

Über die beiden Axialspalte, welche die Verteilerscheibe 6 stirnseitig mit dem jeweils zugeordneten Gehäuseteil 2, 4 definiert ausbildet, breitet sich die Flüssigkeit über die jeweilige Stirnseite S_{I}, S_{II} aus und bildet dabei einen stirnseitigen Flüssigkeitsleckagefilm bzw. eine stirnseitige Flüssigkeitsleckageströmung, welcher / welche die Verteilerscheibe 6 vom zugeordneten Gehäuseteil 2, 4 entsprechend beabstandet. Dabei gelangt die Flüssigkeit durch die Durchgangslöcher DL bis zur jeweils gegenüber liegenden Stirnseite S_{I}, S_{II} der Verteilerscheibe 6.

Je nach Ausrichtung bzw. Drehverstellung der Verteilerscheibe 6 wird entweder eine der besagten Reinigungsstellen des Fahrzeugs mit Flüssigkeit versorgt, indem einer der Ablaufanschlüsse A_{Ai}, A_{Ai+1},..., A_{Ai+n} über die Radialdurchgangsnut DN entsprechend beaufschlagt wird, oder es wird die Flüssigkeitsversorgung gänzlich unterbunden, indem die Verteilerscheibe 6 eine sog. Spülposition bzw. Spülstellung einnimmt. Im letzteren Fall ist die Verteilerscheibe 6 derart zum Gehäuse G, 2, 4 ausgerichtet, dass die Flüssigkeit den Rücklaufanschluss A_{R} (Fig. 2) direkt beaufschlagt, über welchen sie in einen Flüssigkeitstank rückgeführt wird, aus dem sie zuvor herausgefördert worden ist.

In dieser Spülstellung wird die geförderte Flüssigkeit in einem Kreislauf einer Reinigungsvorrichtung des Fahrzeugs umgewälzt, welcher der Flüssigkeitsverteilungsaktuator A angehört. Dabei können die Verteilungseinrichtung D sowie die Reinigungsvorrichtung gespült und/oder entlüftet werden. Dabei wird ferner im besagten Gehäuseraum ein minimales Druckniveau erzeugt.

Ferner kann auch eine weitere Position - eine sog. Neutralposition bzw. Neutralstellung - der Verteilerscheibe 6 vorgesehen sein, in welche die Verteilerscheibe 6 drehbar verstellbar ist und in welcher die Radialdurchgangsnut DN eine Stelle zwischen dem Rücklaufanschluss A_{R} und dem Zulaufanschluss A_{Z} beaufschlagt (vgl. Fig. 2). Auch in dieser Neutralposition ist die Flüssigkeitsversorgung über die einzelnen Ablaufanschlüsse A_{Ai}, A_{Ai+1},..., A_{Ai+n} unterbunden. Dabei wird ein gegenüber der zuvor beschriebenen Position, in welcher die Radialdurchgangsnut DN den Rücklaufanschluss A_{R} (Fig. 2) direkt beaufschlagt, höheres bzw. maximales Druckniveau im Gehäuseraum erzeugt.

Sowohl in der Spülposition als auch in der Neutralposition - bzw. auch Sperrstellung genannt - der Verteilerscheibe 6 verbleiben alle Ablaufanschlüsse A_{Ai}, A_{Ai+1},..., A_{Ai+n} - bis auf den Rücklaufanschluss A_{R} - verschlossen. Dies erreicht man, indem jedem dieser Ablaufanschlüsse A_{Ai}, A_{Ai+1},..., A_{Ai+n} ein entsprechendes - nicht dargestelltes - Sperrventil zugeordnet wird, welches erst ab einem bestimmten Flüssigkeitsdruck öffnet. Über den Rücklaufanschluss A_{R} wird dabei nur die sich in der Neutralposition einstellende Flüssigkeitsleckage abgeführt bzw. dem Flüssigkeitstank rückgeführt.

Diese beiden sich unterscheidenden Druckniveaus können dabei zu Diagnosezwecken verwendet werden.

Der Druck bzw. das Druckniveau im Gehäuseraum liegt dabei bspw. bei ca. 3 bis 8bar.

Mit der Bestimmung der Position bzw. der Lage des Rotors des E-Motors E in Umfangsrichtung ΔΦ lässt sich auch die besagte Relativposition der Radialdurchgangsnut DN zu den einzelnen Stellen des Gehäuses bestimmen.

Die besagte Position bzw. Lage des Rotors liefert dabei zumindest ein im und/oder am E-Motor E verbauter Sensor, beispielsweise ein Hallsensor. Zusätzlich oder alternativ dazu lassen sich auch direkt eine Strom- und Spannungsinformation aus dem E-Motor E zur Bestimmung der Rotorposition bzw. Rotorlage verwenden.

Unabhängig von der Position der Verteilerscheibe 6 wird die sich im Gehäuseraum an den beiden Axialspalten sowie im Radialspalt einstellende Flüssigkeitsleckage - zumindest ab einem bestimmten Mindestdruckniveau im Gehäuseraum - über den Rücklaufanschluss A_{R} (vgl. Fig. 2) in den Flüssigkeitstank rückgeführt (Flüssigkeitsrücklauf).

Der vorgeschlagene Verteilungsmechanismus zeichnet sich im Betrieb durch minimale stirnseitige Axialspalte aus, welche als solche eine Flüssigkeitsleckage im Gehäuseraum minimieren.

Die sich einstellenden minimalen Axialspalte liegen dabei vorteilhafterweise im Bereich von bis zu ca. 10µm. D.h., in der Summe beträgt der minimale Axialspalt zwischen der Verteilerscheibe 6 und dem Gehäuse G, 2, 4 somit bis zu höchstens ca. 20µm.

Das durch diese minimalen Axialspalte reduzierte Flüssigkeitsvolumen im Gehäuseraum begünstigt dabei ferner eine hohe Einfriersicherheit der Verteilungseinrichtung D.

Die symmetrische bzw. zumindest im Wesentlichen symmetrische Verteilerscheibe 6 zeichnet sich dabei außerdem dadurch aus, dass sie nahezu kraftfrei drehbar verstellbar ist und zudem ein geringes Trägheitsmoment aufweist. Und dies geht vorteilhafterweise mit einem relativ geringen Energiebedarf sowie sehr kurzen Umschaltzeiten für die Drehverstellung der Verteilerscheibe 6 einher.

Im durch die Figuren veranschaulichten Ausführungsbeispiel (vgl. Fig. 1) ist die Antriebswelle W des E-Motors E mittels eines gehäuseseitigen Festlagers und eines davon beabstandeten Loslagers am anderen Ende der Welle W - die bspw. jeweils in Gestalt eines Rollenkugellagers ausgebildet sein können - aufgenommen bzw. gelagert.

Alternativ dazu ließe sich aber auch eine Wellenaufnahme bzw. Wellenlagerung vorsehen, nach welcher das gehäuseseitige Wellenende WE gegen das Gehäuseteil 4 bzw. eine im Gehäuseteil 4 angeordnete Kugel drückt und dabei im Betrieb der Verteilungseinrichtung ein hydrodynamisches Lager bildet.

In einer weiteren Ausführungsform kann das Gehäuse G, 2, 4 selbst einen Teil einer Antriebseinheit bzw. eines E-Motors E bilden. Dabei kann die Verteilerscheibe 6 aus einem magnetischen Material ausgeführt sein. Zumindest ein die Verteilerscheibe 6 umschließendes Gehäuseteil, so z.B. das Gehäuseteil 2, bildet dabei den Stator des E-Motors in Gestalt eines bspw. Synchron- oder Reluktanzmotors.

Dadurch ließe sich der Aktuator A mit dem zuvor beschriebenen Verteilungsmechanismus noch kompakter ausführen.

Obwohl in der vorhergehenden Beschreibung exemplarische Ausführungen erläutert werden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

## Patentansprüche

1. Verteilungseinrichtung (D) aufweisend:
ein Gehäuse (G, 2, 4) mit einem Zulaufanschluss (A_{Z}) und mehreren
Ablaufanschlüssen (A_{Ai}, A_{Ai+1},..., A_{Ai+n}) sowie
einen darin angeordneten, elektromotorisch antreibbaren, drehbar verstellbaren Verteiler (6) in Gestalt einer Scheibe, an welcher Flüssigkeitsaufnahme- und Flüssigkeitsführungsmittel ausgeformt sind,
wobei die Verteilerscheibe (6) in definierte Positionen relativ zum Gehäuse (G, 2, 4) drehbar verstellbar ist, um eine Flüssigkeitsversorgung über die einzelnen Ablaufanschlüsse (A_{Ai}, A_{Ai+1},..., A_{Ai+n}) zu ermöglichen,
wobei die Flüssigkeitsaufnahme- und Flüssigkeitsführungsmittel eine stirnseitige (S_{I}, S_{II}) Radialnut (DN) umfassen, welche die Flüssigkeit zu den gewünschten Stellen der Verteilungseinrichtung (D) steuert,
wobei die Radialnut (DN) in Gestalt eines offenen Profils ausgeführt ist und
sich von einer radialumfangsseitigen Außenfläche der Verteilerscheibe (6) in die Verteilerscheibe (6) erstreckt und
wobei der Zulaufanschluss (A_{Z}) einen Radialspalt (RS) mit druckbeaufschlagter Flüssigkeit speist, welchen die Verteilerscheibe (6) radialumfangsseitig mit dem Gehäuse (G, 2, 4) bildet und welcher die Flüssigkeit zur Radialnut (DN) führt,
wobei im Betrieb der Verteilungseinrichtung (D) die Verteilerscheibe (6)
stirnseitig mit einem jeweils zugeordneten Gehäuseabschnitt (2, 4) einen definierten Axialspalt ausbildet, über welchen sich geförderte Flüssigkeit im Gehäuse (G, 2, 4) ausbreitet und dabei stirnseitig (S_{I}, S_{II}) einen Flüssigkeitsleckagefilm bildet, welcher die Verteilerscheibe (6) vom Gehäuse (2, 4) beabstandet,
**dadurch gekennzeichnet, dass**
die Verteilerscheibe (6) stirnseitig (S_{I}, S_{II}) Druckausgleichsmittel in Gestalt von Durchgangslöchern (DL) aufweist.

2. Verteilungseinrichtung nach Anspruch 1, wobei der Zulaufanschluss (A_{Z}) auf der Höhe des Radialspaltes (RS) angeordnet ist.

3. Verteilungseinrichtung nach Anspruch 1 oder 2, wobei ein im Betrieb der Verteilungseinrichtung (D) zwischen der Verteilerscheibe (6) und dem Gehäuse (G, 2, 4) von geförderter Flüssigkeit gefüllter, zusammenhängender Raum mit einem Rücklaufanschluss (A_{R}) am Gehäuse fluidisch verbunden ist.

4. Verteilungseinrichtung nach einem der vorhergehenden Ansprüche, wobei die Verteilerscheibe (6) bezüglich einer Achse orthogonal zur Längsachse (X - X) der Verteilerscheibe symmetrisch ausgebildet ist.

5. Verteilungseinrichtung nach einem der vorhergehenden Ansprüche, wobei die Verteilerscheibe (6) stirnseitig (S_{I}, S_{II}) zumindest ein Druckausgleichsmittel in Gestalt einer Vertiefung (8) aufweist.

6. Flüssigkeitsverteilungsaktuator umfassend:
eine Verteilungseinrichtung (D = Distributionseinrichtung) nach einem der vorhergehenden Ansprüche sowie
einen Elektromotor (E) zum Antrieb des drehbar verstellbaren Verteilers (6) der Verteilungseinrichtung (D).

7. Reinigungsvorrichtung für ein Fahrzeug zur Reinigung einer Vielzahl von Reinigungsstellen am Fahrzeug, wobei die Reinigungsvorrichtung zumindest einen Flüssigkeitsverteilungsaktuator nach Anspruch 6 aufweist.

8. Fahrzeug mit einer Reinigungsvorrichtung nach Anspruch 7.

## Claims

1. Distributing device (D) comprising:
a housing (G, 2, 4) having an inlet connection (Az), a plurality of outlet connections (A_{Ai}, A_{Ai+1},..., A_{Ai+n}) and an electromotively drivable, rotatably adjustable distributor (6) which is arranged therein and which is in the form of a disc, on which liquid receiving means and liquid guiding means are formed, wherein the distributor disc (6) is rotatably adjustable relative to the housing (G, 2, 4) in defined positions in order to allow a supply of liquid via the individual outlet connections (A_{Ai}, A_{Ai+1},..., A_{Ai+n}),
wherein the liquid receiving means and liquid guiding means comprise a front-side (S_{I}, S_{II}) radial groove (DN) which controls the liquid to the desired locations of the distributing device (D),
wherein the radial groove (DN) is embodied in the form of an open profile and extends from a radially circumferential outer surface of the distributor disc (6) into the distributor disc (6), and
wherein the inlet connection (Az) feeds a radial gap (RS) with pressurized liquid, which the distributor disc (6) forms with the housing (G, 2, 4) on the radially circumferential side and which guides the liquid to the radial groove (DN),
wherein during operation of the distributing device (D) the distributor disc (6) forms, at the front side with an associated housing portion (2, 4), a defined axial gap, via which conveyed liquid propagates in the housing (G, 2, 4) and in this instance forms at the front side (S_{I}, S_{II}) a liquid leakage film which spaces the distributor disc (6) apart from the housing (2, 4),
**characterized in that**
the distributor disc (6) has pressure equalization means in the form of through-holes (DL) at the front side (S_{I}, S_{II}).

2. Distributing device according to Claim 1, wherein the inlet connection (A_{Z}) is arranged at the level of the radial gap (RS).

3. Distributing device according to Claim 1 or 2, wherein a coherent space which is filled by conveyed liquid during operation of the distributing device (D) between the distributor disc (6) and the housing (G, 2, 4) is fluidically connected to a return connection (A_{R}) on the housing.

4. Distributing device according to one of the preceding claims, wherein the distributor disc (6) is formed symmetrically with respect to an axis orthogonal to the longitudinal axis (X-X) of the distributor disc.

5. Distributing device according to one of the preceding claims, wherein the distributor disc (6) has at least one pressure equalization means in the form of a depression (8) on the front side (S_{I}, S_{II}).

6. Liquid-distributing actuator comprising:
a distributing device (D = distributing device) according to one of the preceding claims and
an electric motor (E) for driving the rotatably adjustable distributor (6) of the distributing device (D).

7. Cleaning apparatus for a vehicle for cleaning a large number of cleaning locations on the vehicle, wherein the cleaning apparatus comprises at least one liquid-distributing actuator according to Claim 6.

8. Vehicle having a cleaning apparatus according to Claim 7.

## Revendications

1. Dispositif de distribution (D) comportant :
un boîtier (G, 2, 4) doté d'un orifice d'entrée (Az) et d'une pluralité d'orifices de sortie (A_{Ai}, A_{Ai+1},..., A_{Ai+n}), ainsi qu'un distributeur réglable en rotation (6) disposé dans celui-ci, en forme de disque et pouvant être entraîné par un moteur électrique, sur lequel sont formés des moyens d'absorption et d'acheminement de liquide, le disque de distribution (6) étant réglable en rotation dans des positions définies par rapport au boîtier (G, 2, 4) pour permettre l'alimentation en liquide par l'intermédiaire des orifices de sortie (A_{Ai}, A_{Ai+1},..., A_{Ai+n}) individuels,
les moyens d'absorption et d'acheminement de liquide comprenant, côté frontal (S_{I}, S_{II}), une rainure radiale (DN) qui dirige le liquide vers les points souhaités du dispositif de distribution (D),
la rainure radiale (DN) étant réalisée sous la forme d'un profil ouvert et s'étendant depuis une surface extérieure du disque de distribution (6), côté circonférence radiale, dans le disque de distribution (6), et
l'orifice d'entrée (Az) alimentant en liquide sous pression un interstice radial (RS) que le disque de distribution (6) forme radialement, côté circonférence radiale, avec le boîtier (G, 2, 4) et qui guide le liquide vers la rainure radiale (DN),
dans lequel, pendant le fonctionnement du dispositif de distribution (D), le disque de distribution (6) forme, côté frontal, avec la partie de boîtier (2, 4) associée, un interstice axial défini, par l'intermédiaire duquel le liquide transporté se propage dans le boîtier (G, 2, 4) et forme ainsi, côté frontal (S_{I}, S_{II}), un film de fuite de liquide, qui espace le disque de distribution (6) du boîtier (2, 4),
**caractérisé en ce que**
le disque de distribution (6) comporte, côté frontal (S_{I}, S_{II}), des moyens de compensation de pression sous forme de trous traversants (DL).

2. Dispositif de distribution selon la revendication 1, **caractérisé en ce que** l'orifice d'entrée (A_{Z}) est disposé à la hauteur de l'interstice radial (RS).

3. Dispositif de distribution selon la revendication 1 ou 2, **caractérisé en ce qu'**un espace cohésif rempli du liquide transporté pendant le fonctionnement du dispositif de distribution (D) entre le disque de distribution (6) et le boîtier (G, 2, 4) est en communication fluidique avec un raccord de retour (A_{R}).

4. Dispositif de distribution selon l'une des revendications précédentes, **caractérisé en ce que** le disque de distribution (6) est formé symétriquement par rapport à un axe orthogonal à l'axe longitudinal (X - X) du disque de distribution.

5. Dispositif de distribution selon l'une quelconque des revendications précédentes, **caractérisé en ce que** le disque de distribution (6) comporte, côté frontal (S_{I}, S_{II}), au moins un moyen de compensation de pression sous la forme d'un renfoncement (8).

6. Actionneur de distribution de liquide comprenant :
un dispositif de distribution (D = dispositif de distribution) selon l'une des revendications précédentes et
un moteur électrique (E) destiné à entraîner le distributeur réglable en rotation (6) du dispositif de distribution (D).

7. Dispositif de nettoyage destiné à un véhicule pour nettoyer une pluralité de points de nettoyage sur le véhicule, le dispositif de nettoyage comportant au moins un actionneur de distribution de liquide selon la revendication 6.

8. Véhicule comprenant un dispositif de nettoyage selon la revendication 7.
